# EUROPEAN PATENT SPECIFICATION

(11) **EP 1 634 196 B1**
(45) Date of publication and mention of the grant of the patent: **01.07.2020**
(21) Application number: 04739370.7
(22) Date of filing: 26.05.2004
(51) Int. Cl.: G06F 16/25

(54) **DATA PROCESSING METHOD AND SYSTEM FOR COMBINING DATABASE TABLES**
DATENVERARBEITUNGSVERFAHREN UND DATENVERARBEITUNGSSYSTEM ZUM KOMBINIEREN VON DATENBANKTABELLEN
PROCÉDÉ ET SYSTÈME DE TRAITEMENT DE DONNÉES POUR COMBINER DES TABLES DE BASE DE DONNÉES

(30) Priority: 28.05.2003 EP 03012031
(43) Date of publication of application: 15.03.2006
(73) Proprietor: SAP SE, 69190 Walldorf (DE)
(72) Inventor: SCHMITT, Winfried, 69190 Walldorf (DE); HOFMANN, Helmut, 69207 Sandhausen (DE); BALZAR, Andreas, 69115 Heidelberg (DE)
(74) Representative: Richardt Patentanwälte PartG mbB
(86) International application number: PCT/EP2004/005669
(87) International publication number: WO 2004/107204

(56) References cited:
- EP-A- 0 560 543
- EP-A- 0 690 367
- US-A- 5 553 218
- US-A- 5 842 209
- US-A1- 2002 099 691

## Description

### Field of the invention

The present invention relates to the field of data processing systems and more particularly without limitation to relational databases and data warehouses.

### Background and prior art

Databases are computerized information storage and retrieval systems. A Relational Database Management System (RDBMS) is a database management system (DBMS) which uses relational techniques for storing and retrieving data. Relational databases are organized into tables. A database will typically have many tables which are stored on random access storage devices (RASD) such as magnetic or optical disk drives for semi-permanent storage.

In recent years DBMSs have become increasingly popular for several factors, including the decrease in the cost of storage devices and the increased need to store and track electronic information. As DBMSs become increasingly popular, more and more data is stored in databases, and handling, storing, analysing, archiving, moving, and collating the data becomes more of a concern to those utilizing such data.

To manage this increasing data load various software aids, sometimes referred to as utilities, have been developed. One thing that utilities have in common is that utilities assist users in managing data. They may be simple, such as a back up utility, which merely copies several files. They may be more complex, such as a structured query language interface, which has evolved into a standardized mechanism for manipulating data. They also may be complex and sophisticated on line analytical processing programs (OLAP) which are designed to do complex analytical processing.

Different types of data, relational and object, are being stored in data warehouses. The term "data warehouse" is used to describe large amounts of related data that are stored together. With the increased data that is stored, there has been an increasing complexity in using, retrieving, sorting and organizing data.

SAP's Business Information Warehouse is a data warehouse which enables a user to analyse data from operative SAP applications as well as other business applications and external data sources such as databases, online services and the Internet.

The administrator workbench functions of business information warehouse are designed for controlling, monitoring and maintaining all data retrieval processes.

The business explorer of the business information warehouse is a reporting and analysis tool for analysis and decision-making support. The business explorer includes tools for query reporting and online analytical processing (OLAP) functions.

US 2002/0099691 A1 discloses a method and apparatus for aggregation of data in a database management system.

### Summary of the invention

The invention is defined by the appended claims.

In one example, a data processing method is provided. The method enables a user to enter a combination of at least first and second database tables of a set of database tables stored in a data warehouse. The combination of the first and second database tables is stored in a combination table for access of an application program. The application program is adapted to process the database tables of the data warehouse and the combination database table. This has the advantage that a user can conveniently enter information regarding combination of entries in the database tables of the data warehouse.

In accordance with an example a user can select the database tables from the set of database tables stored in the data warehouse. This selection can be restricted by the allowable combinations of data types which can be entered into application program as input data. Pairs of entries of the database tables which the user has combined are stored in the combination database table.

In accordance with an example a matrix is displayed for determining the entries to be combined. The matrix has a column direction for displaying the entries of one of the selected database tables and a row direction for displaying of the entries of the other one of the selected database tables. For each matrix element a check-box is displayed. By clicking on a check-box the user can combine the corresponding column and row entries.

In accordance with an example the entries of the selected database tables are displayed in separate lists which are distanced by a connector field. A combination of list entries is entered by connecting the entries to be combined by a graphical connector symbol.

In accordance with an example the connectors which have been entered for a given entry in one of the lists are visualised in response to a user's selection of the entry.

In accordance with an example a user can enter rules for the combination of entries in different database tables. For example these rules can reflect a business structure of the enterprise as far as the assignment of companies and legal entities of the company to profit centres or business units is concerned.

In accordance with an example the user selects a number n of database tables from the data warehouse to be combined. In order to enter the combination the user specifies m-tuples of entries, where each one of the m-tuples contains one entry from each one of the selected database tables. The m-tuples which are created this way are stored in the combination database table.

For example, a mapping table is stored in the data processing system for each application program that specifies which ones of the database tables or classes of database tables can be combined for the purpose of processing the resultant combination table by the respective application program. A user can only select database tables for combination for the purpose of processing by a selected application program if the mapping table of the selected application program allows combination of the user selected tables. After a user's selection of an allowable database table combination, the user selects one item from each database table of the selected table combination in order to specify an entry into the combination database table that combines entries from the selected database tables.

Preferably the user selects at least two database tables for combination.

In accordance with an example the user selects one of the application programs of the data processing system by means of the user interface. In response the user interface reads the respective table that is assigned to the selected one of the application programs in order to determine the allowed table combinations.

Next, the user enters a combination of two or more database tables. If the selected combination is permitted, the user interface displays a selection screen for a user's selection of data items from the selected tables in order to specify entries into a resultant combination table. After selection of entries of the database tables for specification of respective entries into the combination database table a program module is invoked by the user interface that generates the combination database table as specified by the user and stores the combination database table in the data processing system. Next, the selected application program can be invoked that performs a read access in order to read the combination database table for the purpose of data processing.

The present invention is particularly advantageous as it provides an efficient, user friendly and ergonomic means for specifying input data for an application program on the basis of database tables that are already stored in a data warehouse. By specifying allowed combinations of database tables for a given application program in respective mapping tables entries un-allowed combinations are avoided that would otherwise lead to errors in the data processing performed by the user selected application program.

### Brief description of the drawings

In the following preferred embodiments of the invention will be explained in greater detail by making reference to the drawings, in which:
- Figure 1: Is a block diagram of a preferred embodiment of a data processing system of the invention,
- Figure 2: shows an example of a user defined combination database table,
- Figure 3: Is illustrative of a preferred embodiment of a data processing method of the invention,
- Figure 4: Shows a first embodiment of a user interface for entering combinations of data table entries,
- Figure 5: Is a second embodiment for a user interface for entering of combinations.

### Detailed description

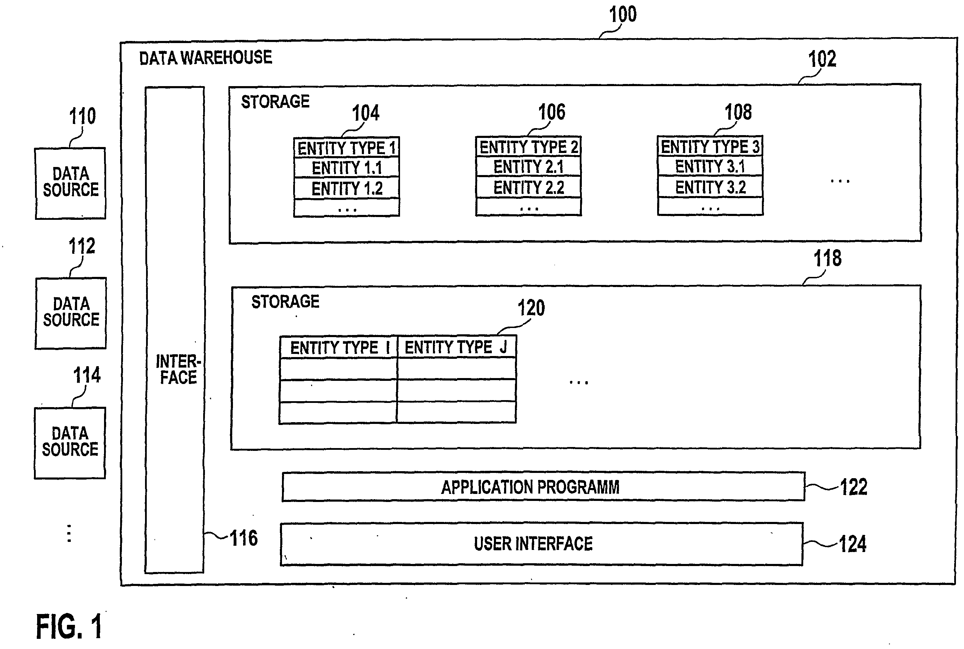

Figure 1 shows data warehouse computer system 100. Data warehouse computer system 100 has storage 102 for storing of a number of database tables 104, 106, 108, .

Data from internal or external data sources 110, 112, 114, ... is extracted, transformed and loaded into data warehouse computer system 100 via interface 116. The imported data is stored in the database tables 104, 106, 108, ..., where each database table stores data of the same entity type. A data item of a certain entity type which is stored in one of the database tables 104, 106, 108,. is referred to as 'entity' in the following.

In the example considered here database table 104 stores entities of entity type 1. For example entity type 1 is 'account numbers of customers'. In this instance entity 1.1 is the account number of customer A, entity 1.1. is the account number of customer B, etc.

Database table 106 stores data entities which have entity type 2. For example entity type 2 is 'account numbers of vendors'. In this instance entity 2.1 is the account number of vendor A, entity 2.2 is the account number of vendor B.

For instance, database table 108 has entity type 3 'legal entity' and stores the legal entities of a company. In this instance entity 3.1 is 'xy GmbH', entity 3.2 is 'xy Ltd', etc.

Further Data Warehouse Computer System 100 has storage 118 for storage of combination database tables 120, ... Combination database table 120 has a left column for storing of entities of entity type i and a right column for storing of entities of entity type j.

Data Warehouse Computer System 100 has application program 122 for performing a certain type of business orientated data processing, such as for the purposes of accounting, book keeping and / or consolidation. The application program 122 is designed to process certain classes of database tables and combination database tables. For example, application programme 122 is designed to process database tables containing account numbers and organisational entities and combination database tables combining legal entities and profit centres.

By means of user interface 124 a user can select first and second database tables of storage 102 as a basis to create combination database table 120. For example the user can select database table 106 having entity type i = 2 and database table 108 having entity type j = 3. Now the user can enter combinations of the entities stored in the database tables 106 and 108. In order to create pairs of entities having entity types i = 2 and j = 3 the user selects one of the entities of entity type 2 of database table 106 and assigns this entity to one of the entities of entity type j = 3 of database table 108. This pair of entities is entered in combination database table 120 whereby the entity having entity type i = 2 is entered in the left column and the other entity having the entity type j = 3 is entered in the same row in the right column. This procedure is performed for all entities of the database tables 106 and 108 which need to be combined.

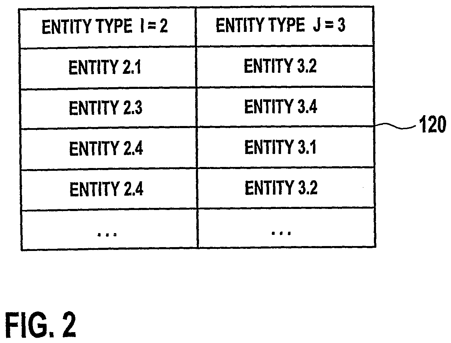

Figure 2 shows an example for the user entries into combination database table 120.

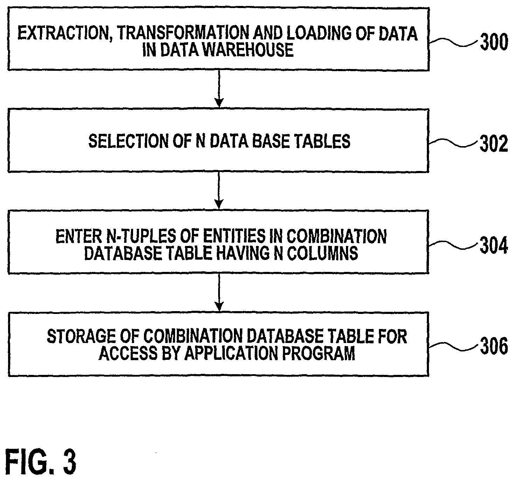

Figure 3 shows a corresponding flow chart. In step 300 data for entity types is extracted, transformed and loaded from internal or external data sources. In step 302 a user selects a number of n database tables of the data warehouse computer system. In step 304 the user specifies a number of n-tuples of entities for storage in the combination database table. In step 306 the resulting combination database table is stored for access by the application programme.

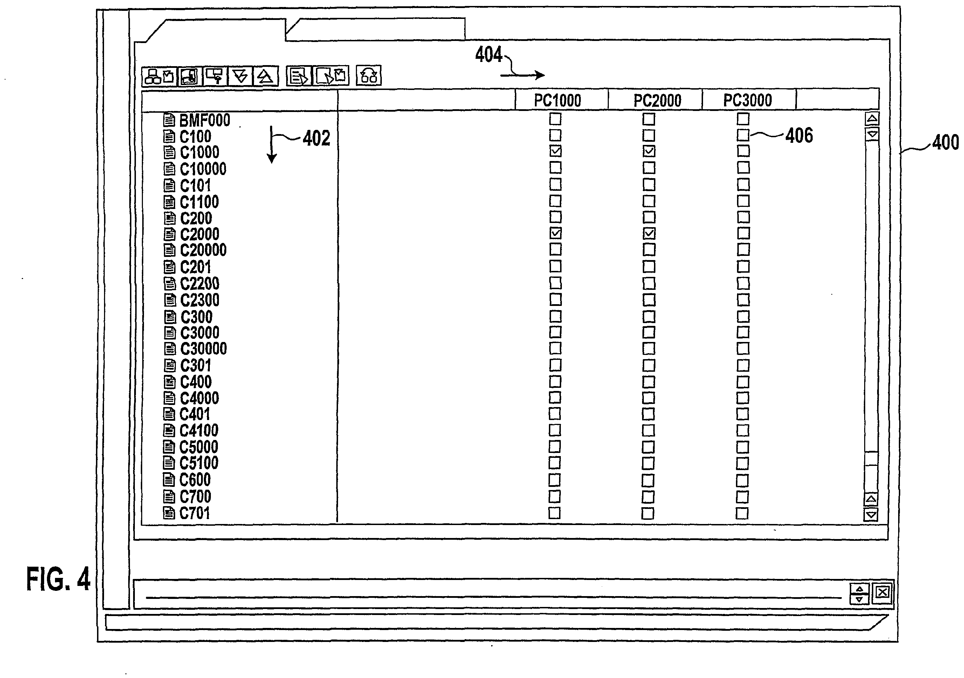

Figure 4 illustrates an embodiment of user interface 124 (cf.1). By means of user interface 124 a dialogue box 400 is created. Previously the user has selected a database table storing legal entities and a database table storing profit centres. The legal entities are displayed in column direction 402 of dialogue box 400 i.e. legal entities BMF00, C100, C1000, C10000, C101...

The profit centres of the other one of the user selected database tables are displayed in row direction 404 within dialogue box 400. This way a matrix is defined, where each matrix element has a coordinate within dialogue box 400 that is determined by a pair of legal entities and profit centres. On each matrix element a check-box 406 is displayed.
In the example considered here the user has checked the check-boxes at matrix elements C1000, PC1000; C1000, PC2000; C2000, PC1000; C2000 and PC2000. This way the user has specified corresponding combinations of entities of the database tables which are stored in the combination database table.

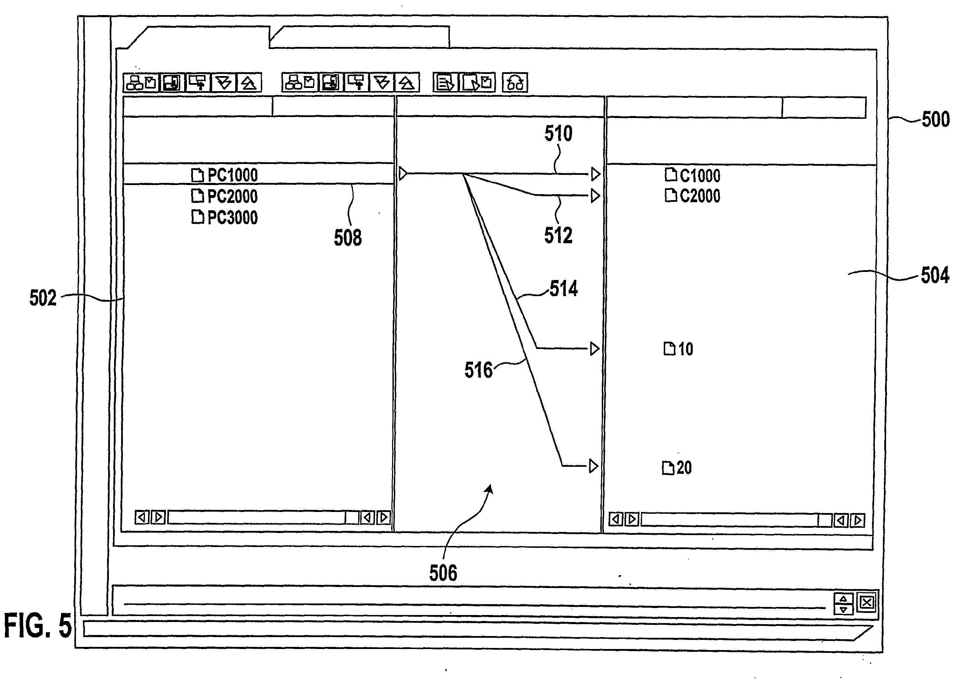

Figure 5 shows an alternative embodiment of user interface 124 (cf.1). Dialogue box 500 shows list 502 of entities of one of the selected database tables, i.e. the database table storing the profit centres. Further dialogue box 500 has list 504 showing the entities of the other one of the selected database tables, i.e. the legal entities of the company.

The lists 502 and 504 are separated by connector field 506. In connector field 506 a user can enter connectors from an entity of list 502 to entities of list 504 and from entities of list 504 to entities of list 502. When a user moves selection bar 508 onto one of the entities of list 502 or list 504 the connectors originating from the selected entity are shown in connector filed 506.

For example the user has moved the selection bar 508 onto profit centre entity 'PC1000' in list 502 in the example shown in the figure 5. In response connectors 510, 512 and 514 are shown in connector field 506.

In addition the user can enter an additional combination between PC1000 and legal entity 20 by entering connector 516. This can be done by drawing a corresponding connection by means of a computer mouse. The user can then move selection bar 508 to another entity of list 502 or 504 for visualisation of previously entered combinations and / or for entering or editing of combinations. These combinations are stored in the corresponding combination database table (cf. combination database table 120 of Figure 1).

It is important to note that more than two lists can be shown in dialogue box 500 on both sides of connector field. Selection bar 508 can be used to select any one of the entities of the lists for display of the connectors originating for the selected entity.

### List of Reference Numerals

- 100: data warehouse computer system
- 102: storage
- 104: database table
- 106: database table
- 108: database table
- 110: data source
- 112: data source
- 114: data source
- 116: interface
- 118: storage
- 120: combination database table
- 122: application program
- 124: user interface
- 400: dialog box
- 402: column direction
- 404: row direction
- 406: check box
- 500: dialog box
- 502: list
- 504: list
- 506: connector field
- 508: selection bar
- 510: connector
- 512: connector
- 514: connector
- 516: connector

## Claims

1. A data processing system comprising:
- a data warehouse (100) having stored therein a set of database tables (104, 106, 108,..) including first and second database tables,
- a plurality of application programs (122),
- a user interface (124) for selection of an application program from the plurality of application programs, and from which a manual selection from a user is received of a combination of the first and second database tables of the set of database tables and from which a manual selection from a user is received of particular combinations of first entries of a first entity type from the first database table with second entries of a second entity type from the second database table,
- means (124) for generating a combination database table (120, ...) for storing the combinations of the selected first and second entries, the combination database table including a first column of the first entity type and a second column of the second entity type, the combination database table storing the combination entries based on the manual selection,
- means (118) for storing the combination database table,
wherein the selected application program is operable to access the means for storing in order to perform a read access on the combination database table for processing the combination database table;
- a mapping table which is stored in the data processing system for each of the application programs that specifies which ones of the database tables can be combined for the purpose of processing the resultant combination table by the respective application program, the user interface being operable to read the mapping table assigned to the selected application program in order to determine allowed database table combinations for the selected application program once the application program has been selected by the user, and
wherein the user interface is further operable to only display such database table combinations for selection of data elements therefrom which have been previously determined to be allowed database table combinations for the selected application program.

2. The data processing system of claim 1, the user interface being adapted for entering a selection of the first and the second database tables and to enter a combination of entries of the first database table and the second database table to create pairs of entries.

3. The data processing system of claim 1 or 2, the means for displaying a matrix having a column direction (402) for displaying of entries of the first database table and having a row direction (404) for displaying of entries of the second database table, and further comprising means for displaying of check-boxes (406) in the matrix elements for entering of combinations of entries of the first and second database tables.

4. The data processing system of claims 1, 2 or 3, the user interface being adapted to enter a selection of a number of m database tables of the set of database tables, and to enter a combination of entries of the selected database tables to create m-tuples, each one of the m-tuples containing one entry from each of the selected database tables.

5. The data processing system of any one of the preceding claims 1 to 4, further comprising means (502, 504) for displaying the first list of entries in the first database table and for displaying a second list of entries and the second database table, whereby the user interface is adapted for entering of a graphical connector (510, 512, 514, 516) between selected entries of the first and the second lists in order to determine the combination of the entries.

6. The data processing system of any one of the preceding Claims 1 to 5, the user interface being adapted for entering of a selection (508) of one of the entries of the first or second lists, and to display of connectors (510, 512, 514, 516) being connected to the selected entry.

7. A data processing method in a data processing system comprising
- a data warehouse (100) having stored therein a set of database tables (104, 106, 108,..) including first and second database tables,
- a plurality of application programs (122),
- a user interface (124) for selection of an application program from the plurality of application programs,
- a mapping table which is stored in the data processing system for each of the application programs that specifies which ones of the database tables can be combined for the purpose of processing a resultant combination table by the respective application program, the method comprising:
- providing the set of database tables and the user interface,
- receiving on the user interface (124) a manual selection from a user of a combination of the first and second database tables of the set of database tables,
- receiving on the user interface (124) a manual selection from a user of particular combinations of first entries of a first entity type from the first database table with second entries of a second entity type from the second database table,
- generating a combination database table (120, ...) for storing *the* combinations of the selected first and second entries, the combination database table including a first column of the first entity type and a second column of the second entity type, the combination database table storing the combination entries based on the manual selection,
- storing the combination database table in a storing means,
wherein the selected application program is operable to access the storing means in order to perform a read access on the combination database table for processing the combination database table;
wherein the user interface is reading the mapping table assigned to the selected application program in order to determine allowed database table combinations for the selected application program once the application program has been selected by the user, and
wherein the user interface is further only displaying such database table combinations for selection of data elements therefrom which have been previously determined to be allowed database table combinations for the selected application program.

## Patentansprüche

1. Datenverarbeitungssystem, umfassend:
- ein Data Warehouse (100), in dem ein Satz von Datenbanktabellen (104, 106, 108, ...) gespeichert ist, der eine erste und eine zweite Datenbanktabelle einschließt,
- mehrere Anwendungsprogramme (122),
- eine Benutzerschnittstelle (124) zum Auswählen eines Anwendungsprogramms aus den mehreren Anwendungsprogrammen, und von der aus eine von einem Benutzer vorgenommene manuelle Auswahl einer Kombination aus der ersten und der zweiten Datenbanktabelle von dem Satz von Datenbanktabellen empfangen wird und von der aus eine von einem Benutzer vorgenommene manuelle Auswahl bestimmter Kombinationen aus ersten Einträgen einer ersten Eintragsart aus der ersten Datenbanktabelle mit zweiten Einträgen einer zweiten Eintragsart aus der zweiten Datenbanktabelle empfangen wird,
- eine Einrichtung (124) zur Erzeugung einer Kombinations-Datenbanktabelle (120, ...) zum Speichern der Kombinationen aus den ausgewählten ersten und zweiten Einträgen, wobei die Kombinations-Datenbanktabelle eine erste Spalte mit der ersten Eintragsart und eine zweite Spalte mit der zweiten Eintragsart aufweist, wobei die Kombinations-Datenbanktabelle die Kombinationseinträge auf Basis der manuellen Auswahl speichert,
- eine Einrichtung (118) zum Speichern der Kombinations-Datenbanktabelle,
wobei das ausgewählte Anwendungsprogramm betreibbar ist, um auf die Einrichtung zum Speichern zuzugreifen, um einen Lesezugriff auf die Kombinations-Datenbanktabelle durchzuführen, um die Kombinations-Datenbanktabelle zu verarbeiten;
- für jedes von den Anwendungsprogrammen eine Abbildungstabelle, die in dem Datenverarbeitungssystem gespeichert ist und die spezifiziert, welche von den Datenbanktabellen zum Zwecke der Verarbeitung der resultierenden Kombinationstabelle durch das jeweilige Anwendungsprogramm kombiniert werden können, wobei die Benutzerschnittstelle ferner betreibbar ist, um die Abbildungstabelle, die dem ausgewählten Anwendungsprogramm zugeordnet ist, zu lesen, um zulässige Datenbanktabellenkombinationen für das ausgewählte Anwendungsprogramm zu bestimmen, nachdem das Anwendungsprogramm von dem Benutzer ausgewählt wurde, und
wobei die Benutzerschnittstelle ferner so betreibbar ist, dass sie nur solche Datenbanktabellenkombinationen für die Auswahl von darin enthaltenen Datenbankelementen anzeigt, die zuvor als zulässige Datenbanktabellenkombinationen für das ausgewählte Anwendungsprogramm bestimmt wurden.

2. Datenverarbeitungssystem nach Anspruch 1, wobei die Benutzerschnittstelle ausgelegt ist zum Eingeben einer Auswahl der ersten und der zweiten Datenbanktabelle und zum Eingeben einer Kombination aus Einträgen der ersten Datenbanktabelle und der zweiten Datenbanktabelle, um Eintragspaare zu erzeugen.

3. Datenverarbeitungssystem nach Anspruch 1 oder 2, wobei die Einrichtung zum Anzeigen einer Matrix eine Spaltenrichtung (402) zum Anzeigen von Einträgen der ersten Datenbanktabelle aufweist und eine Zeilenrichtung (404) zum Anzeigen von Einträgen der zweiten Datenbanktabelle aufweist und ferner eine Einrichtung zum Anzeigen von Kontrollkästchen (406) in den Matrixelementen zum Eingeben von Kombinationen von Einträgen der ersten und der zweiten Datenbanktabelle umfasst.

4. Datenverarbeitungssystem nach den Ansprüchen 1, 2 oder 3, wobei die Benutzerschnittstelle ausgelegt ist für die Eingabe einer Auswahl einer Anzahl von m Datenbanktabellen aus dem Satz von Datenbanktabellen und für die Eingabe einer Kombination von Einträgen aus den ausgewählten Datenbanktabellen, um m-Tupel zu erzeugen, wobei jedes von den m-Tupeln genau einen Eintrag aus jeder von den ausgewählten Datenbanktabellen enthält.

5. Datenverarbeitungssystem nach einem der vorangehenden Ansprüche 1 bis 4, ferner eine Einrichtung (502, 504) zum Anzeigen der ersten Liste von Einträgen in der ersten Datenbanktabelle und zum Anzeigen einer zweiten Liste von Einträgen und der zweiten Datenbanktabelle umfassend, wobei die Benutzerschnittstelle dafür ausgelegt ist, einen grafischen Konnektor (510, 512, 514, 516) zwischen ausgewählten Einträgen der ersten und der zweiten Liste einzugeben, um die Kombination der Einträge zu bestimmen.

6. Datenverarbeitungssystem nach einem der vorangehenden Ansprüche 1 bis 5, wobei die Benutzerschnittstelle dafür ausgelegt ist, eine Auswahl (508) von einem der Einträge der ersten oder der zweiten Liste einzugeben und Konnektoren (510, 512, 514, 516) anzuzeigen, die mit dem ausgewählten Eintrag verbunden sind.

7. Datenverarbeitungsverfahren in einem Datenverarbeitungssystem, umfassend:
- ein Data Warehouse (100), in dem ein Satz von Datenbanktabellen (104, 106, 108, ...) gespeichert ist, der eine erste und eine zweite Datenbanktabelle einschließt,
- mehrere Anwendungsprogramme (122),
- eine Benutzerschnittstelle (124) zum Auswählen eines Anwendungsprogramms aus den mehreren Anwendungsprogrammen,
- für jedes von den Anwendungsprogrammen eine Abbildungstabelle, die in dem Datenverarbeitungssystem gespeichert ist und die spezifiziert, welche von den Datenbanktabellen zum Zwecke der Verarbeitung einer resultierenden Kombinationstabelle durch das jeweilige Anwendungsprogramm kombiniert werden können,
wobei das Verfahren umfasst:
- Bereitstellen des Satzes von Datenbanktabellen und der Benutzerschnittstelle,
- Empfangen einer von einem Benutzer vorgenommenen manuellen Auswahl einer Kombination aus der ersten und der zweiten Datenbanktabelle aus dem Satz von Datenbanktabellen an der Benutzerschnittstelle (124),
- Empfangen einer von einem Benutzer vorgenommenen manuellen Auswahl bestimmter Kombinationen aus ersten Einträgen einer ersten Eintragsart aus der ersten Datenbanktabelle mit zweiten Einträgen einer zweiten Eintragsart aus der zweiten Datenbanktabelle an der Benutzerschnittstelle (124),
- Erzeugen einer Kombinations-Datenbanktabelle (120, ...) zum Speichern von Kombinationen aus den ausgewählten ersten und zweiten Einträgen, wobei die Kombinations-Datenbanktabelle eine erste Spalte mit der ersten Eintragsart und eine zweite Spalte mit der zweiten Eintragsart aufweist, wobei die Kombinations-Datenbanktabelle die Kombinationseinträge auf Basis der manuellen Auswahl speichert,
- Speichern der Kombinations-Datenbanktabelle in einer Speichereinrichtung,
wobei das ausgewählte Anwendungsprogramm betreibbar ist, um auf die Speichereinrichtung zuzugreifen, um einen Lesezugriff auf die Kombinations-Datenbanktabelle durchzuführen, um die Kombinations-Datenbanktabelle zu verarbeiten;
wobei die Benutzerschnittstelle die Abbildungstabelle liest, die dem ausgewählten Anwendungsprogramm zugeordnet ist, um zulässige Datenbanktabellenkombinationen für das ausgewählte Anwendungsprogramm zu bestimmen, nachdem das Anwendungsprogramm von dem Benutzer ausgewählt wurde, und wobei die Benutzeroberfläche ferner nur solche Datenbanktabellenkombinationen für die Auswahl von darin enthaltenen Datenbankelementen anzeigt, die zuvor als zulässige Datenbanktabellenkombinationen für das ausgewählte Anwendungsprogramm bestimmt wurden.

## Revendications

1. Système de traitement de données comprenant :
- un entrepôt de données (100) ayant stocké un ensemble de tableaux de bases de données (104, 106, 108, ...) comportant des premier et deuxième tableaux de bases de données,
- une pluralité de programmes d'application (122),
- une interface d'utilisateur (124) pour une sélection d'un programme d'application à partir de la pluralité de programmes d'application, et à partir duquel une sélection manuelle provenant d'un utilisateur est reçue d'une combinaison des premier et deuxième tableaux de bases de données de l'ensemble de tableaux de bases de données et à partir duquel une sélection manuelle provenant d'un utilisateur est reçue de combinaisons particulières de premières entrées d'un premier type d'entité provenant du premier tableau de bases de données avec des deuxièmes entrées d'un deuxième type d'entité provenant du deuxième tableau de bases de données,
- des moyens (124) permettant la génération d'un tableau de bases de données de combinaison (120, ...) pour le stockage des combinaisons des première et deuxième entrées sélectionnées, le tableau de bases de données de combinaison comportant une première colonne du premier type d'entité et d'une deuxième colonne du deuxième type d'entité, le tableau de bases de données de combinaison stockant les entrées de combinaison sur la base de la sélection manuelle,
- des moyens (118) permettant le stockage du tableau de bases de données de combinaison,
dans lequel le programme d'application sélectionné est opérationnel pour accéder aux moyens permettant le stockage afin de réaliser un accès en lecture sur le tableau de bases de données de combinaison pour le traitement du tableau de bases de données de combinaison ;
- un tableau de mise en correspondance est stocké dans le système de traitement de données pour chacun des programmes d'application qui spécifie lequel des tableaux de bases de données peut être combiné à des fins de traitement du tableau de combinaison résultant par le programme d'application respectif,
l'interface d'utilisateur étant opérationnelle pour lire le tableau de mise en correspondance associé au programme d'application sélectionné afin de déterminer des combinaisons de tableaux de bases de données permises pour le programme d'application sélectionné une fois que le programme d'application a été sélectionné par l'utilisateur, et
dans lequel l'interface d'utilisateur est en outre opérationnelle pour afficher uniquement des combinaisons de tableaux de bases de données pour une sélection d'éléments de données à partir de celles-ci qui ont été précédemment déterminées comme étant des combinaisons de tableaux de base de données permises pour le programme d'application sélectionné.

2. Système de traitement de données selon la revendication 1, l'interface d'utilisateur étant adapté pour entrer une sélection des premier et deuxième tableaux de bases de données et pour entrer une combinaison d'entrées du premier tableau de bases de données et du deuxième tableau de bases de données pour créer des paires d'entrées.

3. Système de traitement de données selon la revendication 1 ou la revendication 2, les moyens permettant d'afficher une matrice ayant une direction de colonne (402) pour l'affichage d'entrées du premier tableau de bases de données et ayant une direction de rangée (404) pour l'affichage d'entrées du deuxième tableau de bases de données, et comprenant en outre des moyens permettant l'affichage de boites de vérification (406) dans les éléments de matrice pour entrer des combinaisons d'entrées des premier et deuxième tableaux de bases de données.

4. Système de traitement de données selon les revendications 1, 2 ou 3, l'interface d'utilisateur étant adapté pour entrer une sélection d'un nombre de m tableaux de bases de données de l'ensemble de tableaux de bases de données, et pour entrer une combinaison d'entrées des tableaux de bases de données sélectionnés pour créer des tuples d'ordre m, chacun des tuples m contenant une entrée provenant de chacun des tableaux de bases de données sélectionnés.

5. Système de traitement de données selon l'une quelconque des revendications précédentes 1 à 4, comprenant en outre des moyens (502, 504) permettant d'afficher une première liste d'entrées dans le premier tableau de bases de données et d'afficher une deuxième liste d'entrées et le deuxième tableau de bases de données, ce par quoi l'interface d'utilisateur est adapté pour entrer d'un connecteur graphique (510, 512, 514, 516) entre des entrées sélectionnées des première et deuxième listes afin de déterminer la combinaison des entrées.

6. Système de traitement de données selon l'une quelconque des revendications précédentes 1 à 5, l'interface d'utilisateur étant adaptée pour l'entrée d'une sélection (508) de l'une des entrées de la première ou de la deuxième liste, et pour l'affichage de connecteurs (510, 512, 514, 516) étant connectés à l'entrée sélectionnée.

7. Procédé de traitement de données dans un système de traitement de données comprenant
- un entrepôt de données (100) ayant stocké un ensemble de tableaux de bases de données (104, 106, 108, ...) comportant des premier et deuxième tableaux de bases de données,
- une pluralité de programmes d'application (122),
- une interface d'utilisateur (124) pour une sélection d'un programme d'application à partir de la pluralité de programmes d'application,
- un tableau de mise en correspondance est stocké dans le système de traitement de données pour chacun des programmes d'application qui spécifie lequel des tableaux de bases de données peut être combiné à des fins de traitement du tableau de combinaison résultant par le programme d'application respectif,
le procédé comprenant :
- la mise à disposition de l'ensemble de tableaux de bases de données et de l'interface d'utilisateur,
- la réception sur l'interface d'utilisateur (124) d'une sélection manuelle provenant d'un utilisateur d'une combinaison des premier et deuxième tableaux de bases de données parmi les tableaux de bases de données,
- la réception sur l'interface d'utilisateur (124) d'une sélection manuelle provenant d'un utilisateur de combinaisons particulières de premières entrées d'un premier type d'entité provenant du premier tableau de base de données avec des deuxièmes entrées d'un deuxième type d'entité provenant du deuxième tableau de bases de données,
- la génération d'un tableau de bases de données de combinaison (120, ...) pour le stockage des combinaisons des première et deuxième entrées sélectionnées, le tableau de bases de données de combinaison comportant une première colonne du premier type d'entité et une deuxième colonne du deuxième type d'entité, le tableau de bases de données de combinaison stockant les entrées de combinaison sur la base de la sélection manuelle,
- le stockage du tableau de bases de données de combinaison dans un moyen de stockage,
dans lequel le programme d'application sélectionné est opérationnel pour accéder au moyen de stockage afin d'exécuter un accès en lecture sur le tableau de bases de données de combinaison pour le traitement du tableau de bases de données de combinaison ;
dans lequel l'interface d'utilisateur est en train de lire le tableau de mise en correspondance associé au programme d'application sélectionné afin de déterminer des combinaisons de tableau de bases de données permises pour le programme d'application sélectionné une fois que le programme d'application a été sélectionné par l'utilisateur, et
dans lequel l'interface d'utilisateur est en outre uniquement en train d'afficher de telles combinaisons de tableau de bases de données pour la sélection d'éléments de donnée à partir de celui-ci qui ont été précédemment déterminés comme étant des combinaisons de tableau de bases de données permises pour le programme d'application sélectionné.
